# EUROPÄISCHE PATENTSCHRIFT

(11) **EP 3 884 246 B1**
(45) Veröffentlichungstag und Bekanntmachung des Hinweises auf die Patenterteilung: **20.09.2023**
(21) Anmeldenummer: 19797698.8
(22) Anmeldetag: 31.10.2019
(51) Int. Cl.: G01F 23/284, G01N 22/00

(54) **MESSGERÄT**
MEASURING DEVICE
APPAREIL DE MESURE

(30) Priorität: 21.11.2018 DE 102018129356
(43) Veröffentlichungstag der Anmeldung: 29.09.2021
(73) Patentinhaber: Endress+Hauser SE+Co. KG, 79689 Maulburg (DE)
(72) Erfinder: BLÖDT, Thomas, 79585 Steinen (DE); PFLÜGER, Stefan, 81379 München (DE)
(74) Vertreter: Koslowski, Christine Adelheid
(86) Internationale Anmeldenummer: PCT/EP2019/079874
(87) Internationale Veröffentlichungsnummer: WO 2020/104166

(56) Entgegenhaltungen:
- EP-A1- 1 321 565
- DE-A1- 10 016 315
- DE-A1-102016 120 231
- DE-U1-202013 102 514
- US-A1- 2003 117 150

## Beschreibung

Die Erfindung betrifft ein Messgerät zur Bestimmung des Dielektrizitätswertes eines in einem Behälter befindlichen Füllgutes.

In der Automatisierungstechnik, insbesondere in der Prozessautomatisierungstechnik, werden vielfach Feldgeräte eingesetzt, die zur Erfassung und/oder zur Beeinflussung von Prozessvariablen dienen. Zur Erfassung von Prozessvariablen werden Sensoren eingesetzt, die beispielsweise in Füllstandsmessgeräten, Grenzstandmessegräte, Durchflussmessgeräten, Druck- und Temperaturmessgeräten, pH-Messgeräten, Leitfähigkeitsmessgeräten, oder Dielektrizitätswert-Messgeräten zum Einsatz kommen. Sie erfassen die entsprechenden Prozessvariablen, wie Füllstand, Grenzstand, Durchfluss, Druck, Temperatur, pH-Wert, Redoxpotential, Leitfähigkeit, oder den Dielektrizitätswert. Dabei werden unter dem Begriff "Behälter" im Rahmen der Erfindung auch nicht-abgeschlossene Behältnisse, wie beispielsweise Becken, Seen oder fließende Gewässer verstanden. Eine Vielzahl dieser Feldgeräte wird von der Firma Endress + Hauser hergestellt und vertrieben.

Die Bestimmung des Dielektrizitätswertes (auch bekannt als *"Dielektrizitätskonstante"* oder "*Relative Permittivität*") ist sowohl bei Feststoffen, als auch bei flüssigen Füllgütern, wie beispielsweise Treibstoffen, Abwässern oder Chemikalien von großem Interesse, da dieser Wert einen zuverlässigen Indikator für Verunreinigungen, den Feuchtegehalt oder die Stoffzusammensetzung darstellen kann. Zur Bestimmung des Dielektrizitätswertes kann nach dem Stand der Technik vor allem bei flüssigen Füllgütern auf das kapazitive Messprinzip zurückgegriffen werden. Dabei wird der Effekt genutzt, dass sich die Kapazität eines Kondensators proportional mit dem Dielektrizitätswert desjenigen Mediums, das sich zwischen den zwei Elektroden des Kondensators befindet, ändert.

Alternativ ist es auch möglich, den Dielektrizitätswert eines (flüssigen) Mediums in einem Behälter-Inneren quasi parasitär bei dessen Füllstandsmessung mitzubestimmen. Dies erfordert das Messprinzip des geführten Radars, bei dem Mikrowellen über einen elektrisch leitfähigen Wellenleiter in das Medium geführt werden. Beschrieben ist diese kombinierte Füllstands- und Dielektrizitäts-Messung in der Offenlegungsschrift DE 10 2015 117 205 A1, DE 10 2016 120231 A1, US2003117150.

Eine weitere Alternative zum kapazitiven oder Mikrowellen-basierten Dielektrizitätswert-Messung besteht in induktiver Messung. Dieses Messprinzip beruht darauf, dass die resultierende Impedanz einer Spule nicht nur von ihrer Windungszahl, dem Windungsmaterial und dem Material des Spulenkerns abhängt, sondern auch vom Füllgut, das jeweils an die Spule angrenzt und somit vom Magnetfeld der Spule durchdrungen wird. Dementsprechend kann der Dielektrizitätswert mittels Messung der komplexen Spulen-Impedanz bestimmt werden.

Auf Basis der oben genannten Messprinzipien ist der DK-Wert betragsmäßig sehr genau bestimmbar, eine komplexwertige Bestimmung ist jedoch nur vergleichsweise ungenau möglich. Gerade die komplexwertige Bestimmung ist jedoch interessant, um das Füllgut hinsichtlich seiner Eigenschaften bzw. seiner Zusammensetzung näher charakterisieren zu können.

Der Erfindung liegt daher die Aufgabe zugrunde, ein Messgerät bereitzustellen, mit dem der Dielektrizitätswert auch komplexwertig mit einer hohen Genauigkeit bestimmt werden kann.

Die Erfindung löst diese Aufgabe durch ein Messgerät zur Messung eines Dielektrizitätswertes eines in einem Behälter befindlichen Füllgutes. Gemäß der Erfindung umfasst es zumindest:
- Eine Signalerzeugungs-Einheit, die konzipiert ist, um
- eine Sende-Elektrode derart mittels eines elektrischen Wechselspannungs-Signals anzusteuern, dass die Sende-Elektrode ein Radar-Signal in Richtung des Füllgutes aussendet, wobei die Sende-Elektrode (5) im Behälter anordbar ist,
- eine Empfangs-Elektrode, die so im Behälter anordbar ist, um das Radar-Signal nach Durchlauf durch das Füllgut zu empfangen,
- eine Auswertungs-Einheit, die ausgelegt ist, um
   o anhand des von der Empfangs-Elektrode empfangenen Radar-Signals eine Amplitude, eine Phasenverschiebung und/oder eine Signal-Laufzeit zwischen Sende-Elektrode und Empfangs-Elektrode zu ermitteln, und
   o um anhand der ermittelten Signal-Laufzeit, Phasenverschiebung und/oder der ermittelten Amplitude den Dielektrizitätswert zu bestimmen. Dabei kann der Realteil des Dielektrizitätswertes anhand der Signallaufzeit bzw. der Phasenverschiebung bestimmt werden; Der Imaginärteil lässt sich anhand der gemessenen Signal-Amplitude ermitteln.

Erfindungsgemäß sind die Sende-Elektrode und die Empfangs-Elektrode parallel zueinander ausgerichtet, wobei die Sende-Elektrode und die Empfangs-Elektrode jeweils zumindest
- eine dielektrische Resonatorschicht und
- eine metallische Reflektionsschicht, die in Bezug zur jeweils anderen Elektrode hinter der dielektrischen Resonatorschicht angebracht ist,umfassen.

Vorteilhaft an dem erfindungsgemäßen Messgerät bzw. dem damit einhergehenden Messverfahren ist, dass sich der Dielektrizitätswert auch komplexwertig über einen weiten Messbereich mit hoher Messauflösung bestimmen lässt. Dabei ist lediglich ein begrenzter schaltungstechnischer Aufwand erforderlich.

Im Kontext dieser Erfindung definiert sich der Begriff "Radar" als allgemein als Signal bzw. elektromagnetische Welle mit einer Frequenz zwischen 0.03 GHz und 300 GHz. Bezüglich des erfindungsgemäßen Messgerätes ist es jedoch von Vorteil, wenn die Signalerzeugungs-Einheit ausgelegt ist, das Wechselspannungs-Signal mit einer Frequenz zwischen 0,4 GHz und 30 GHz, zu erzeugen.

Unter dem Begriff *"Einheit"* wird im Rahmen der Erfindung prinzipiell jede elektronische Schaltung verstanden, die für ihren Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine (halbleiterbasierte) Digitalschaltung wie einem FPGA oder einen Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Messgerätes im Sinne der Erfindung potentiell auch auf einen gemeinsamen physikalischen Speicher zurückgreifen bzw. mittels derselben physikalischen Digitalschaltung betrieben werden.

Das Messgerät lässt sich besonders energieeffizient betreiben, wenn die Sende-Elektrode und die Empfangs-Elektrode jeweils zumindest eine dielektrische Resonatorschicht und eine metallische Reflektionsschicht, die in Bezug zur jeweils anderen Elektrode hinter der dielektrischen Resonatorschicht angebracht ist, umfassen. In diesem Kontext ist es außerdem von Vorteil, wenn die dielektrischen Resonatorschichten aus einem Material gefertigt sind, dass einen relativen Dielektrizitätswert zwischen 2 und 30 aufweist. Durch die Resonatorschichten lässt sich das Radar-Signal in einem weiten Wertebereich von Dielektrizitäts-Werten des Füllgutes aus- bzw. einkoppeln. Zudem ist es vorteilhaft, wenn das Material, aus dem dielektrische Resonatorschicht gefertigt ist, eine magnetische Permeabilität zwischen 0,5 und 10 aufweist. Hierdurch lassen sich die Baugrößen der Sende- und Empfangs-Elektrode verringern.

Eine effiziente Sende-Elektrode bzw. eine effiziente Empfangs-Elektrode lässt sich beispielsweise auf Leiterplattenbasis realisieren, wenn die Sende-Elektrode und die Empfangs-Elektrode jeweils zumindest ein Array aus Planar-Strahlern, das in Bezug zur jeweils anderen Elektrode entweder vorderseitig auf der dielektrischen Resonatorschicht oder im Inneren der dielektrischen Resonatorschicht angeordnet ist, umfasst. Dabei kann die Resonatorschicht durch das Leiterplattensubstrat ausgebildet werden. Die metallische Reflektionsschicht und die Planar-Strahler können analog zu Leiterbahn-Strukturierung als ggf. strukturierte Kupfer- oder Silber-Lagen konzipiert und gefertigt werden. Zwecks optimierter Abstrahlung des Radar-Signals ist es in diesem Zusammenhang außerdem vorteilhaft, wenn die dielektrische Resonatorschicht bzw. das Leiterplattensubstrat eine Tiefe aufweist, die einem Viertel der Wellenlänge des Radar-Signals oder einem Vielfachen hiervon entspricht.

Das anzuwendende Verfahren zur Bestimmung der Signallaufzeit des Radar-Signals ist erfindungsgemäß nicht fest vorgegeben. So kann als Messprinzip beispielsweise das Pulslaufzeit-Verfahren, das FMCW-Verfahren (Akronym für *"Frequency Modulated Continuos Wave*") oder ein Phasenauswertungs-Verfahren, wie bspw. ein interferometrisches Verfahren, angewendet werden. Die Messprinzipien des FMCW- und Pulsradar- basierten Laufzeit-Messverfahren werden beispielsweise in "Radar Level Measurement"; Peter Devine, 2000 beschrieben.

Wenn das Messgerät konzipiert ist, die Signallaufzeit mittels des FMCW-Verfahrens zu bestimmen, ist die Signalerzeugungs-Einheit auszulegen, um das Wechselspannungs-Signal derart mit einer variierenden Frequenz zu erzeugen, dass die Auswertungs-Einheit die Signal-Laufzeit anhand einer Differenzfrequenz zwischen dem ausgesendeten Radar-Signal und dem empfangenen Radar-Signal bestimmen kann. Bei Implementierung des Pulslaufzeit-Verfahrens ist die Signalerzeugungs-Einheit auszulegen, um Wechselspannungs-Signal derart pulsförmig zu erzeugen, dass die Auswertungs-Einheit die Signal-Laufzeit anhand einer Pulslaufzeit zwischen der Sende-Elektrode und der Empfangs-Elektrode bestimmen kann.

Analog zum erfindungsgemäßen Messgerät wird die Aufgabe, die der Erfindung zugrunde liegt, zudem durch ein entsprechendes Verfahren gelöst, dass zur Messung eines Dielektrizitätswertes eines in einem Behälter befindlichen Füllgutes dient. Korrespondierend zum Messgerät umfasst es folgende Verfahrensschritte:
- Aussenden eines Radar-Signals in Richtung des Füllgutes,
- Empfang des Radar-Signals nach Durchlauf durch das Füllgut,
- Bestimmung einer Amplitude des empfangenen Radar-Signals und/oder einer Signal-Laufzeit zwischen Aussenden und Empfang des Radar-Signals, und
- Ermittlung des Dielektrizitätswertes anhand der Amplitude, der Phasenverschiebung und/oder der Signallaufzeit.

Anhand der nachfolgenden Figuren wird die Erfindung näher erläutert. Es zeigt:
Fig. 1: eine schematische Anordnung eines erfindungsgemäßen Messgerätes an einem Behälter,
Fig. 2: einen prinzipiellen Aufbau des erfindungsgemäßen Messgerätes,
Fig. 3: eine Frontalansicht der Sende-Elektrode bzw. der Empfangs-Elektrode, und
Fig. 4: eine mögliche Integration des Messgerätes in einen vibronischen Grenzstand-Detektor.

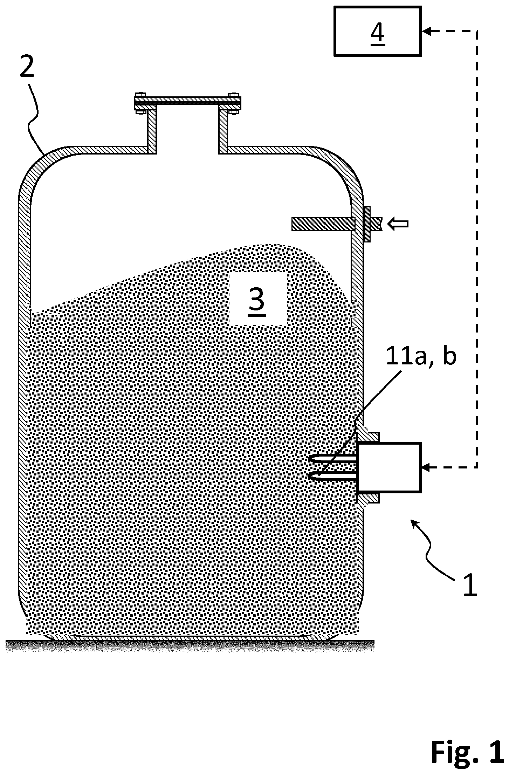

Zum allgemeinen Verständnis des erfindungsgemäßen Messgerätes 1 ist in Fig. 1 eine schematische Anordnung des Messgerätes 1 an einem Behälter 2 gezeigt. Dabei befindet sich in dem Behälter ein Füllgut 3, dessen Dielektrizitätswert DK zu bestimmen ist. Hierzu ist das Messgerät 1 seitlich an einem Anschluss des Behälters 2, wie bspw. einem Flanschanschluss angeordnet. Dabei ist das Messgerät 1 so ausgelegt, dass zwei Elektroden 11a, 11b des Messgerätes 1 in Kontakt mit dem Füllgut 3 stehen. Die Elektroden 11a, 11b sind parallel zueinander ausgerichtet, so dass sich das Füllgut 3 zumindest teilweise zwischen den Elektroden 11a, 11b befindet.

Bei dem Füllgut 3 kann es sich um Flüssigkeiten wie Getränke, Lacke, Zement oder Treibstoffe wie Flüssiggase oder Mineralöle handeln. Denkbar ist jedoch auch die Verwendung des Messgerätes 1 bei Schüttgut-förmigen Füllgütern 3, wie bspw. Getreide oder Mehl. Das Messgerät 1 kann mit einer übergeordneten Einheit 4, zum Beispiel einem Prozessleitsystem, verbunden sein. Als Schnittstelle kann etwa "PROFIBUS", "HART" oder "Wireless HART" implementiert sein. Hierüber kann der Dielektrizitätswert DK übermittelt werden. Es können aber auch anderweitige Informationen über den allgemeinen Betriebszustand des Messgerätes 1 kommuniziert werden.

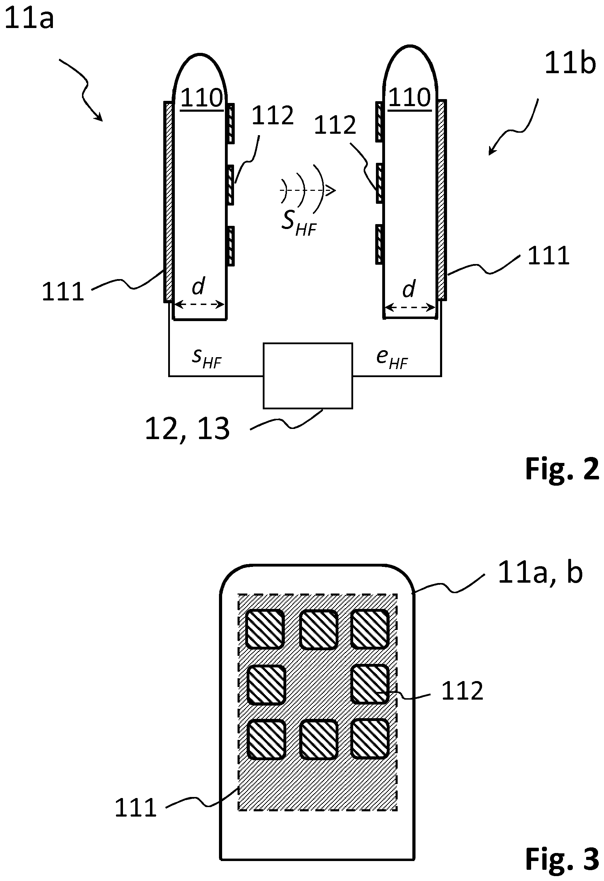

Der prinzipielle schaltungstechnische Aufbau des Messgerätes 1 wird anhand von Fig. 2 näher veranschaulicht: Wie zu erkennen ist, fungiert eine der Elektroden 11a, 11b als Sende-Elektrode 11a für ein auszusendendes Radar-Signal S_{HF}. Die zweite, parallel gegenüber angeordnete Elektrode 11b dient als Empfangs-Elektrode 11b für das eingehende Radar-Signal S_{HF}, nachdem es das Füllgut 3 zwischen den zwei Elektroden 11a, 11b durchdrungen hat. Auch wechselseitiges Senden/Empfangen wäre möglich.

Von der Struktur her sind die zwei Elektroden 11a, 11b prinzipiell analog aufgebaut: Den Kern jeder Elektrode 11a, 11b bildet eine plattenförmig ausgelegte Resonatorschicht 110 aus einem dielektrischen Material. Um als Resonator für das Radar-Signal S_{HF} zu wirken, ist das Material der Resonatorschicht 110 vorzugsweise so zu wählen, dass es einen Dielektrizitätswert zwischen 2 und 30 aufweist. In diesem Zusammenhang ist es außerdem vorteilhaft, wenn dieses Material eine magnetische Permeabilität zwischen 0,5 und 10 aufweist, um so die Baugröße zu reduzieren. Dementsprechend können als potentielle Materialien beispielsweise
- Keramiken wie Al₂O₃,
- (Glasfaserverstärkte) Kunststoffe, wie insbesondere PE, PP, PTFE,
- oder metallische Gläser, wie beispielsweise gemäß der Veröffentlichungsschrift US 20160113113 A1 beschrieben,
verwendet werden. Auf der rückseitigen Fläche der Resonatorschicht 110 jeder Elektrode 11a, 11b (in Bezug zu der jeweils anderen Elektrode11a, b) ist vorzugsweise vollflächig eine metallische Reflektionsschicht 111 aufgebracht. Sie dient als Reflektor für das Radar-Signal S_{HF}, wodurch die Intensität des Radar-Signals S_{HF} zwischen den zwei Elektroden 11a,11 b erhöht wird.

Zur Erzeugung des Radar-Signals S_{HF} steuert eine Signalerzeugungs-Einheit 12 die Sende-Elektrode 11a mittels eines entsprechenden Wechselspannungs-Signal S_{HF} an. Dabei wird die Wellenlänge des Radar-Signals S_{HF} durch die Frequenz des Wechselspannungs-Signals S_{HF} festgelegt. Da der Dielektrizitätswert DK des Füllgutes 3 erfindungsgemäß durch Messung der Amplitude des empfangenen Radar-Signals S_{HF} bzw. durch Messung der Signal-Laufzeit zwischen Sende-Elektrode 11a und Empfangs-Elektrode 11b ermittelt wird, ist die Empfangs-Elektrode 11b an eine hierzu ausgelegte Auswertungs-Einheit 13 angeschlossen. Hierdurch empfängt die Auswertungs-Einheit 13 das an der Empfangs-Elektrode eintreffende Radar-Signal S_{HF} entsprechend als elektrisches Empfangssignal e_{HF}. Da sich die Amplitude proportional zum Imaginärteil des Dielektrizitätswertes DK verhält, kann anhand der Amplitude des empfangenen Radar-Signals S_{HF} der Imaginärteil bestimmt werden. Analog gilt dies für die Signal-Laufzeit bzw. die Phasenverschiebung und den Realteil des Dielektrizitätswertes DK.

Da es erfindungsgemäß nicht fest vorgeschrieben ist, welches Messprinzip zur Bestimmung der Signal-Laufzeit des Radar-Signals S_{HF} eingesetzt wird, sind die Auswertungs-Einheit 13 und der Signalerzeugungs-Einheit 12 in Abhängigkeit des implementierten Messprinzips auszulegen. Hierbei kann auf jeweils bekannte Schaltungskomponenten zurückgegriffen werden: Im Fall von FMCW kann die Signalerzeugungs-Einheit 12 auf Basis einer PLL ("*Phase Locked Loop*") aufbaut sein; Die Auswertungs-Einheit 13 kann mittels eines Mischers das gesendete Wechselspannungs-Signal S_{HF} mit dem Empfangs-Signal e_{HF} mischen, um anhand der Differenzfrequenz des gemischten Signals die Laufzeit zu ermitteln. Dies kann beispielsweise per FFT (*"Fast Fourier Transformation*") des gemischten Signals e_{HF} mittels eines entsprechenden Rechenblocks erfolgen.

Bei Implementierung des Puls-Laufzeit-Verfahrens kann die Signalerzeugungs-Einheit 12 zur pulsförmigen Erzeugung des Wechselspannungs-Signals S_{HF} einen entsprechend zyklisch angesteuerten Oszillator, beispielsweise einen spannungsgesteuerten Oszillator oder lediglich einen Quarzoszillator, umfassen. Die Auswertungs-Einheit 13 kann das Empfangs-Signal e_{HF} beim Puls-Laufzeit-Verfahren durch Unterabtastung verarbeiten. Somit kann die Auswertungs-Einheit 13 die Signal-Laufzeit des korrespondierenden Signalmaximums anhand des abgetasteten und somit zeitgedehnten Signals ermitteln.

In der gezeigten Ausführungsvariante der Sende-Elektrode 11a bzw. der Empfangs-Elektrode 11b ist auf der vorderseitigen Fläche der Resonatorschicht 110 (wiederum in Bezug zu der jeweils anderen Elektrode11a, b) jeweils ein Array 112 aus Planar-Strahlern angebracht. Wie in Fig. 3 zu erkennen ist, umfasst das Array 112 in der gezeigten Ausführungsvariante der Elektroden 11a, 11b drei mal drei in etwa rechteckige Patchantennen, Bei einer Frequenz zwischen 2 GHz und 30 GHz kann die Kantenlänge der Patchantennen zwischen 0,2 mm und 50 mm betragen. Vorteilhaft ist es allgemein, wenn die Kantenlänge deutlich kleiner als ein Viertel der Wellenlänge des Radar-Signals S_{HF} ist, da in diesem Fall kein elektromagnetisches Fernfeld ausgebildet wird.

Elektrisch sind die Patchantennen vorzugsweise auf das gleiche Potential zu legen. Hierzu können die Patchantennen beispielsweise über ein Verteilernetzwerk, das als entsprechende Mikrostreifenleitungen (nicht dargestellt) ausgeführt ist, miteinander kontaktiert sein. Im Gegensatz zu der gezeigten Ausführungsvariante könnten die Patchantennen beispielsweise auch als Fraktal- oder Spiral-Strahler realisiert sein.

Vorteilhaft an der in Fig. 2 bzw. 3 gezeigten Ausführung der Elektroden 11a, 11b ist, dass sie auf Leiterkartenbasis realisiert werden können. Dabei können die dielektrischen Resonatorschichten 110 durch das Leiterplattensubstrat gebildet werden. Die Patchantennen 112 und die rückseitigen metallischen Reflektionsschichten 111 können beispielsweise als entsprechend strukturierte Kupfer- oder Silber-Lage realisiert werden.

Im Gegensatz zu der gezeigten Ausführungsvariante könnten das Array 112 der Patchantennen anstelle der oberflächigen Anordnung auch als tieferliegende Schicht innerhalb der Leiterplatte bzw. innerhalb der Resonatorschicht 110 realisiert werden. Dabei kann die Resonatorschicht 110 bei dieser Ausführungsform zudem vor den Patchantennen 112 (in Bezug zur Abstrahlrichtung des Radar-Signals S_{HF}) mit entsprechenden Aussparungen konzipiert werden. Hierdurch wird die Abstrahlung bzw. der Empfang des Radar-Signals S_{HF} weiter auf den Bereich zwischen den Elektroden 11a, 11b fokussiert.

Bei der in Fig. 2 gezeigten Ausführungsvariante der Elektroden 11a, 11b ist die Signalerzeugungs-Einheit 12 zur Übertragung des Wechselspannungs-Signals S_{HF} an die Sende-Elektrode 11a mit dessen metallischer Reflektionsschicht 111 kontaktiert. Die Auswertungs-Einheit 13 kontaktiert analog dazu die metallische Reflektionsschicht 111 der Empfangs-Elektrode 11b. Anstelle dieser Form der Kontaktierung der Elektroden 11a, 11b ist es auch möglich, die Signalerzeugungs-Einheit 12 bzw. die Auswertungs-Einheit 13 zusätzlich oder alternativ zu den Reflektionsschichten 111 mit dem Patchantennen-Array 112 zu kontaktieren. Hierdurch ergibt sich eine erhöhte Sende- bzw. Empfangs-Effizienz.

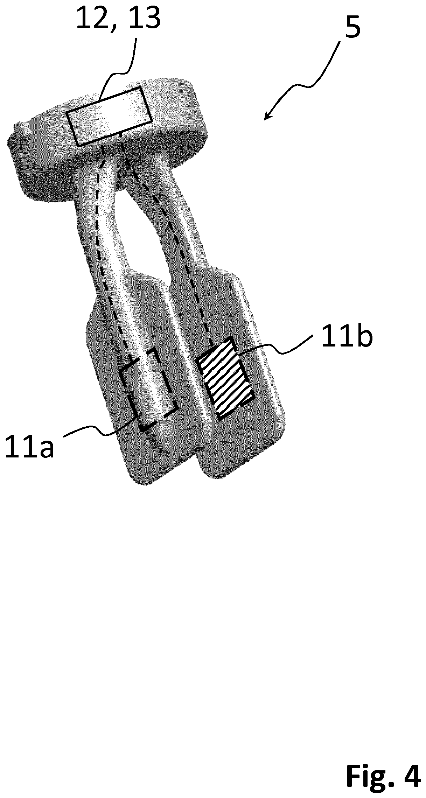

In Fig. 4 wird eine mögliche Integration des Dielektrizitätswert-Mesgerätes 1 in einem vibronischen Grenzstand-Sensor 5 gezeigt, wobei der gezeigte Grenzstand-Sensor 5 auf dem Zwei-Schwinggabel Prinzip basiert. Dabei ist die Sende-Elektrode 11a in einer der zweit Schwinggabeln integriert, die Empfangselektrode 11b ist gegenüberliegend in der zweiten Schwinggabel integriert. Durch die Integration der Elektroden 11a, 11b bzw. der Signalerzeugungs-Einheit 12 und der Auswertungs-Einheit 13 lassen sich diese zwei Messprinzipien, Grenzstand-Messung und Dielektrizitäts-Messung, in ein und demselben Messgerät realisieren.

### Bezugszeichenliste

- 1: Messgerät
- 2: Behälter
- 3: Füllgut
- 4: Übergeordnete Einheit
- 5: Vibronischer Grenzstand-Detektor
- 11a,b: Sende-/ Empfangs-Elektrode
- 12: Signalerzeugungs-Einheit
- 13: Auswertungs-Einheit
- 110: Resonatorschicht
- 111: Reflektionsschicht
- 112: Planarstrahler-Array
- DK: Dielektrizitätswert
- d: Tiefe der Resonator-Schicht
- e_{HF}: Empfangs-Signal
- S_{HF}: Radar-Signal
- S_{HF}: Wechselspannungs-Signal

## Patentansprüche

1. Messgerät zur Messung eines Dielektrizitätswertes (DK) eines in einem Behälter (2) befindlichen Füllgutes (3), umfassend:
- Eine Signalerzeugungs-Einheit (12), die konzipiert ist, um
- eine Sende-Elektrode (11a) derart mittels eines elektrischen Wechselspannungs-Signals (s_{HF}) anzusteuern, dass die Sende-Elektrode (11a) ein Radar-Signal (S_{HF}) in Richtung des Füllgutes (3) aussendet, wobei die Sende-Elektrode (5) im Behälter anordbar ist,
- eine Empfangs-Elektrode (11b), die so im Behälter (2) anordbar ist, um das Radar-Signal (S_{HF}) nach Durchlauf durch das Füllgut (3) zu empfangen, und
- eine Auswertungs-Einheit (13), die ausgelegt ist, um
o anhand des von der Empfangs-Elektrode (11b) empfangenen Radar-Signals (S_{HF}) eine Amplitude, eine Phasenverschiebung und/oder eine Signal-Laufzeit zwischen Sende-Elektrode (11a) und Empfangs-Elektrode (11b) zu ermitteln, und
o um anhand der ermittelten Signal-Laufzeit, Phasenverschiebung und/oder der ermittelten Amplitude den Dielektrizitätswert (DK) zu bestimmen, wobei die Sende-Elektrode und die Empfangs-Elektrode parallel zueinander ausgerichtet sind, wobei die Sende-Elektrode (11a) und die Empfangs-Elektrode (11b) jeweils zumindest
- eine dielektrische Resonatorschicht (110) und
- eine metallische Reflektionsschicht (111), die in Bezug zur jeweils anderen Elektrode (11a, b) hinter der dielektrischen Resonatorschicht (110) angebracht ist,
umfassen.

2. Messgerät nach Anspruch 1, wobei die dielektrische Resonatorschicht (110) aus einem Material gefertigt ist, dass einen relativen Dielektrizitätswert zwischen 2 und 30 aufweist, und/oder
wobei das Material, aus dem dielektrische Resonatorschicht (110) gefertigt ist, eine magnetische Permeabilität zwischen 0,5 und 10 aufweist.

3. Messgerät nach Anspruch 1 oder 2, wobei die Sende-Elektrode (11a) und die Empfangs-Elektrode (11b) jeweils zumindest
- ein Array aus Planar-Strahlern (112), das in Bezug zur jeweils anderen Elektrode (11a, b) entweder vorderseitig auf der dielektrischen Resonatorschicht (110) oder im Inneren der dielektrischen Resonatorschicht (110) angeordnet ist,
umfasst.

4. Messgerät nach einem der vorhergehenden Ansprüche, wobei die dielektrische Resonatorschicht (110) eine Tiefe (d) aufweist, die einem Viertel der Wellenlänge des Radar-Signals (S_{HF}) oder einem Vielfachen hiervon entspricht.

5. Messgerät nach einem der vorhergehenden Ansprüche, wobei die Signalerzeugungs-Einheit (12) ausgelegt ist, das Wechselspannungs-Signal (s_{HF}) derart mit einer variierenden Frequenz (f) zu erzeugen, dass die Auswertungs-Einheit (13) die Signal-Laufzeit anhand einer Frequenzdifferenz zwischen dem ausgesendeten Radar-Signal (S_{HF}) und dem empfangenen Radar-Signal (S_{HF}) bestimmt.

6. Messgerät nach einem der Ansprüche 1 bis 4, wobei die Signalerzeugungs-Einheit (12) ausgelegt ist, das Wechselspannungs-Signal (s_{HF}) derart pulsförmig auszusenden, dass die Auswertungs-Einheit (13) die Signal-Laufzeit anhand einer Pulslaufzeit zwischen der Sende-Elektrode (11a) und der Empfangs-Elektrode (11b) bestimmt.

7. Messgerät nach einem der vorhergehenden Ansprüche, wobei die Signalerzeugungs-Einheit (12) ausgelegt ist, das Wechselspannungs-Signal (s_{HF}) mit einer Frequenz zwischen 0,4 GHz und 30 GHz, zu erzeugen.

8. Verfahren zur Messung eines Dielektrizitätswertes (DK) eines in einem Behälter (2) befindlichen Füllgutes (3) mittels des Messgerätes (1) nach zumindest einem der vorhergehenden Ansprüche, folgende Verfahrensschritte umfassend:
- Aussenden eines Radar-Signals (S_{HF}) in Richtung des Füllgutes (3),
- Empfang des Radar-Signals (S_{HF}) nach Durchlauf durch das Füllgut (3),
- Bestimmung einer Amplitude des empfangenen Radar-Signals (S_{HF}) und/oder einer Signal-Laufzeit zwischen Aussenden und Empfang des Radar-Signals (S_{HF}), und
- Ermittlung des Dielektrizitätswertes (DK) anhand der Amplitude und/oder der Signallaufzeit.

9. Verfahren nach Anspruch 8, wobei die Signallaufzeit mittels des Pulslaufzeit-Verfahrens bestimmt wird.

10. Verfahren nach Anspruch 8, wobei die Signallaufzeit mittels des FMCW-Verfahrens bestimmt wird.

11. Verfahren nach Anspruch 8, wobei die Signallaufzeit mittels eines Phasenauswertungs-Verfahrens, insbesondere einem interferometrischen Verfahren, bestimmt wird.

## Claims

1. A measuring device for measuring a dielectricity value (DK) of a filling material (3) present in a container (2), comprising:
- A signal generating unit (12) which is designed to activate a transmitting electrode (11a) using an electrical AC signal (SHF) in such a way that the transmitting electrode (11a) transmits a radar signal (SHF) toward the filling material (3), wherein the transmitting electrode (5) can be arranged in the container,
- A receiving electrode (11b) which can be arranged in the container (2) so that it receives the radar signal (SHF) once it has passed through the filling material (3), and
- An evaluation unit (13) which is configured
to determine an amplitude, a phase shift and/or a signal duration between the transmitting electrode (11a) and the receiving electrode (11b) using the radar signal (SHF) received by the receiving electrode (11b), and
to determine the dielectricity value (DK) using the ascertained signal duration, phase shift and/or the ascertained amplitude,
wherein the transmitting electrode and the receiving electrode are aligned parallel to each other,
wherein the transmitting electrode (11a) and the receiving electrode (11b) each comprise at least
- a dielectric resonator layer (110) and
- a metallic reflective layer (111) which is attached behind the dielectric resonator layer (110) relative to the other electrode (11a, b).

2. The measuring device as claimed in claim 1, wherein the dielectric resonator layer (110) is made from a material which has a relative dielectricity value of between 2 and 30, and/or
wherein the material from which the dielectric resonator layer (110) is made has a magnetic permeability of between 0.5 and 10.

3. The measuring device as claimed in claim 1 or 2, wherein the transmitting electrode (11a) and the receiving electrode (11b) each comprise at least
- an array of planar emitters (112) which is arranged either on the front of the dielectric resonator layer (110) or inside the dielectric resonator layer (110) relative to the other electrode (11a, b).

4. The measuring device as claimed in one of the preceding claims, wherein the dielectric resonator layer (110) has a depth (d) equal to one quarter of the wavelength of the radar signal (SHF) or a multiple thereof.

5. The measuring device as claimed in one of the preceding claims, wherein the signal generating unit (12) is configured to generate the AC signal (SHF) with a varying frequency (f) in such a way that the evaluation unit (13) determines the signal duration using a frequency difference between the transmitted radar signal (SHF) and the received radar signal (SHF).

6. The measuring device as claimed in one of claims 1 to 4, wherein the signal generating unit (12) is configured to transmit the AC signal (SHF) in the shape of a pulse in such a way that the evaluation unit (13) determines the signal duration using a pulse duration between the transmitting electrode (11a) and the receiving electrode (11b).

7. The measuring device as claimed in one of the preceding claims, wherein the signal generating unit (12) is configured to generate the AC signal (SHF) with a frequency of between 0.4 GHz and 30 GHz.

8. A method for measuring a dielectricity value (DK) of a filling material (3) present in a container (2) using the measuring device (1) as claimed in at least one of the preceding claims, comprising the following process steps:
Transmitting a radar signal (SHF) toward the filling material (3),
- Receiving the radar signal (SHF) once it has passed through the filling material (3),
- Determining an amplitude of the received radar signal (SHF) and/or a signal duration between transmission and reception of the radar signal (SHF), and
Determining the dielectricity value (DK) using the amplitude and/or the signal duration.

9. The method as claimed in claim 8, wherein the signal duration is determined using the pulse duration method.

10. The method as claimed in claim 8, wherein the signal duration is determined using the FMCW method.

11. The method as claimed in claim 8, wherein the signal duration is determined using a phase evaluation method, in particular an interferometric method.

## Revendications

1. Appareil de mesure destiné à la mesure d'une valeur diélectrique (DK) d'un produit (3) se trouvant dans un réservoir (2), lequel appareil comprend :
- une unité de génération de signaux (12), laquelle est conçue pour commander
-- une électrode d'émission (11a) au moyen d'un signal électrique de tension alternative (S_{HF}) de telle sorte que l'électrode d'émission (11a) émette un signal radar (S_{HF}) en direction du produit (3), l'électrode d'émission (5) pouvant être disposée dans le réservoir,
-- une électrode de réception (11b) pouvant être disposée dans le réservoir (2) de manière à recevoir le signal radar (S_{HF}) après son passage à travers le produit (3), et
- une unité d'évaluation (13), laquelle est conçue pour déterminer
o à l'aide du signal radar (S_{HF}) reçu par l'électrode de réception (11b), une amplitude, un déphasage et/ou un temps de propagation du signal entre l'électrode d'émission (11a) et l'électrode de réception (11b),
et pour déterminer
o la valeur diélectrique (DK) à l'aide du temps de propagation du signal, du déphasage et/ou de l'amplitude déterminés,
l'électrode d'émission et l'électrode de réception étant orientées parallèlement l'une à l'autre,
l'électrode d'émission (11a) et l'électrode de réception (11b) comprenant chacune au moins
- une couche de résonateur diélectrique (110) et
- une couche de réflexion métallique (111), laquelle est disposée derrière la couche de résonateur diélectrique (110) respectivement par rapport à l'autre électrode (11a, b).

2. Appareil de mesure selon la revendication 1,
pour lequel la couche de résonateur diélectrique (110) est fabriquée en un matériau qui présente une valeur diélectrique relative comprise entre 2 et 30,
et/ou
pour lequel le matériau à partir duquel la couche de résonateur diélectrique (110) est fabriquée présente une perméabilité magnétique comprise entre 0,5 et 10.

3. Appareil de mesure selon la revendication 1 ou 2, pour lequel l'électrode d'émission (11a) et l'électrode de réception (11b) comprennent chacune au moins
- un réseau d'émetteurs planaires (112), lequel réseau est disposé respectivement par rapport à l'autre électrode (11a, b), soit à l'avant sur la couche de résonateur diélectrique (110), soit à l'intérieur de la couche de résonateur diélectrique (110).

4. Appareil de mesure selon l'une des revendications précédentes, pour lequel la couche de résonateur diélectrique (110) présente une profondeur (d) correspondant à un quart de la longueur d'onde du signal radar (S_{HF}) ou à un multiple de celle-ci.

5. Appareil de mesure selon l'une des revendications précédentes, pour lequel l'unité de génération de signaux (12) est conçue pour générer le signal de tension alternative (S_{HF}) avec une fréquence variable (f) de telle sorte que l'unité d'évaluation (13) détermine le temps de propagation du signal à l'aide d'une différence de fréquence entre le signal radar (S_{HF}) émis et le signal radar (S_{HF}) reçu.

6. Appareil de mesure selon l'une des revendications 1 à 4, pour lequel l'unité de génération de signaux (12) est conçue pour émettre le signal de tension alternative (S_{HF}) sous forme d'impulsions de telle sorte que l'unité d'évaluation (13) détermine le temps de propagation du signal à l'aide d'un temps de propagation des impulsions entre l'électrode d'émission (11a) et l'électrode de réception (11b).

7. Appareil de mesure selon l'une des revendications précédentes, pour lequel l'unité de génération de signaux (12) est conçue pour générer le signal de tension alternative (S_{HF}) avec une fréquence comprise entre 0,4 GHz et 30 GHz.

8. Procédé destiné à la mesure d'une valeur diélectrique (DK) d'un produit (3) se trouvant dans un réservoir (2) au moyen de l'appareil de mesure (1) selon au moins l'une des revendications précédentes, lequel procédé comprend les étapes suivantes :
- Émission d'un signal radar (S_{HF}) en direction du produit (3),
- Réception du signal radar (S_{HF}) après passage à travers le produit (3),
- Détermination d'une amplitude du signal radar (S_{HF}) reçu et/ou d'un temps de propagation du signal entre l'émission et la réception du signal radar (S_{HF}), et
- Détermination de la valeur diélectrique (DK) à l'aide de l'amplitude et/ou du temps de propagation du signal.

9. Procédé selon la revendication 8, pour lequel le temps de propagation du signal est déterminé au moyen du procédé du temps de propagation des impulsions.

10. Procédé selon la revendication 8, pour lequel le temps de propagation du signal est déterminé au moyen de la méthode FMCW.

11. Procédé selon la revendication 8, pour lequel le temps de propagation du signal est déterminé au moyen d'un procédé d'évaluation de phase, notamment un procédé interférométrique.
